# EUROPÄISCHE PATENTSCHRIFT

(11) **EP 2 726 413 B1**
(45) Veröffentlichungstag und Bekanntmachung des Hinweises auf die Patenterteilung: **08.03.2017**
(21) Anmeldenummer: 12733070.2
(22) Anmeldetag: 29.06.2012
(51) Int. Cl.: C01C 1/08, B01D 53/56, B01D 53/90, B01D 53/92, B01D 53/94, B01J 8/04, C01C 1/04, F01N 3/20

(54) **AMMONIAKGASGENERATOR ZUR ERZEUGUNG VON AMMONIAK ZUR REDUZIERUNG VON STICKOXIDEN IN ABGASEN**
AMMONIA GAS GENERATOR FOR PRODUCING AMMONIA IN ORDER TO REDUCE NITROGEN OXIDES IN EXHAUST GASES
GÉNÉRATEUR DE GAZ AMMONIAC POUR PRODUIRE DE L'AMMONIAC POUR LA RÉDUCTION D'OXYDES D'AZOTE DANS DES GAZ DE COMBUSTION

(30) Priorität: 01.07.2011 DE 102011106233; 01.07.2011 DE 102011106237; 01.07.2011 DE 102011106243
(43) Veröffentlichungstag der Anmeldung: 07.05.2014
(73) Patentinhaber: AlzChem AG, 83308 Trostberg (DE)
(72) Erfinder: GERHART, Christian, 83313 Siegsdorf (DE); SATTELMAYER, Thomas, 85435 Erding (DE); TOSHEV, Plamen, 86153 Augsburg (DE)
(74) Vertreter: Weickmann & Weickmann PartmbB
(86) Internationale Anmeldenummer: PCT/EP2012/062757
(87) Internationale Veröffentlichungsnummer: WO 2013/004634

(56) Entgegenhaltungen:
- WO-A1-2008/077588
- DE-A1- 4 230 056
- JP-A- 2006 170 013
- JP-A- 2008 267 269
- JP-A- 2009 062 860

## Beschreibung

Die vorliegende Erfindung betrifft einen Ammoniakgasgenerator zur Erzeugung von Ammoniak aus einer Ammoniakvorläufersubstanz und dessen Verwendung in Abgasnachbehandlungssystemen zur Reduktion von Stickoxiden in Abgasen.

In Abgasen von Verbrennungskraftmaschinen sind oftmals Stoffe enthalten, deren Emission in die Umwelt unerwünscht ist. Daher werden in vielen Ländern Grenzwerte für die Emission solcher Schadstoffe, wie beispielsweise im Abgas von Industrieanlagen oder Automobilen festgelegt, die einzuhalten sind. Zu diesen Schadstoffen zählen neben einer Reihe anderer Schadstoffe auch Stickoxide (NOₓ), wie insbesondere Stickstoffmonoxid (NO) oder Stickstoffdioxid (NO₂).

Die Reduzierung der Emission dieser Stickoxide aus Abgasen von Verbrennungsmotoren kann auf verschiedene Art und Weise erfolgen. Hervorzuheben ist an dieser Stelle die Reduktion durch zusätzliche Abgasnachbehandlungsmaßnahmen, die insbesondere auf die selektive katalytische Reduktion (selective catalytic reduction - SCR) zurückgreifen. Diesen Methoden ist gemeinsam, dass ein selektiv auf die Stickoxide wirkendes Reduktionsmittel dem Abgas zugegeben wird, worauf in Gegenwart eines entsprechenden Katalysators (SCR-Katalysator) eine Umwandlung der Stickoxide erfolgt. Hierbei werden die Stickoxide in weniger umweltschädliche Stoffe, wie beispielsweise Stickstoff und Wasser umgewandelt.

Ein heute bereits eingesetztes Reduktionsmittel für Stickoxide stellt Harnstoff (H₂N-CO-NH₂) dar, welches in Form einer wässrigen Harnstofflösung dem Abgas zugegeben wird. Dabei kann sich der Harnstoff im Abgasstrom in Ammoniak (NH₃) zersetzen, beispielsweise durch Einwirkung von Wärme (Thermolyse) und/ oder durch Reaktion mit Wasser (Hydrolyse). Der somit gebildete Ammoniak stellt das eigentliche Reduktionsmittel für Stickoxide dar.

Die Entwicklung von Abgasnachbehandlungssystemen für Automobile wird seit geraumer Zeit betrieben und ist Gegenstand zahlreicher Publikationen. So wird beispielsweise mit der europäischen Patentschrift EP 487 886 B1 ein Verfahren zur selektiven katalytischen NOₓ-Reduktion in sauerstoffhaltigen Abgasen von Dieselmotoren beschrieben, in dem Harnstoff und dessen Thermolyseprodukte als Reduktionsmittel eingesetzt werden. Zudem wird eine Vorrichtung zur Erzeugung vom Ammoniak in Form eines Röhrenverdampfers beschrieben, die eine Sprühvorrichtung, einen Verdampfer mit Verdampferrohre und einen Hydrolysekatalysator umfasst.

Des Weiteren wird mit der Europäischen Patentschrift EP 1 052 009 B1 ein Verfahren und eine Vorrichtung zur Durchführung des Verfahrens zur thermischen Hydrolyse und Dosierung von Harnstoff bzw. Harnstofflösungen in einem Reaktor unter Zuhilfenahme eines Abgasteilstroms beschrieben. In dem Verfahren wird einem Abgasstrang stromauf des SCR-Katalysators ein Teilstrom des Abgases entnommen und durch den Reaktor geleitet, wobei der nach der Hydrolyse im Reaktor mit Ammoniak beladene Teilstrom ebenfalls noch stromauf des SCR-Katalysators wieder in den Abgasstrang zurückgeführt wird.

Zudem wird mit der europäischen Patentschrift EP 1 338 562 B1 eine Vorrichtung und Verfahren beschrieben, welches die katalytische Reduktion von Stickoxiden durch Ammoniak nutzt. Der Ammoniak wird hierbei unter Bedingungen der Blitzthermolyse aus Harnstoff in fester Form sowie der Hydrolyse aus Isocyansäure gewonnen und dem Abgasstrom eines Fahrzeuges zugeleitet.

Des Weiteren wird mit der europäischen Patentanmeldung EP 1 348 840 A1 eine Abgasreinigungsanlage als eine als Ganzes transportable Baueinheit in Form eines 20-Fuß-Containers beschrieben. Die Anlage wird derart betrieben, dass eine Harnstoff- oder Ammoniaklösung direkt mittels einer Eindüseinrichtung in den Abgasstrom eingedüst wird. Die Reduktion der in dem Abgas enthaltenden Stickoxide erfolgt an einem SCR-Katalysator.

Weiterhin wird mit der deutschen Patentanmeldung DE 10 2006 023 147 A1 eine Vorrichtung zur Erzeugung von Ammoniak beschrieben, die Teil eines Abgasnachbehandlungssystems ist.

Zudem wird weiterhin mit den internationale Anmeldung WO 2008/ 077 587 A1 und WO 2008/ 077 588 A1 ein Verfahren zur selektiven katalytischen Reduktion von Stickoxiden in Abgasen von Fahrzeugen mittels wässrigen Guanidiniumsalzlösungen beschrieben. In diesen Verfahren wird ein Reaktor eingesetzt, der aus den wässrigen Guanidiniumsalzlösungen Ammoniak erzeugt.

DE 42 30 056 A1 betrifft eine Zerstäubereinrichtung zum Zerstäuben eines Mediums mittels Druckgas unter Anwendung einer Zerstäuberdüse und beschreibt unter anderem das Einsprühen einer wässrigen Harnstofflösung in einen Abgasstrang zur Reduktion von NOₓ.

JP 2006-170013 beschreibt ein Abgasnachbehandlungssystem umfassend eine Vorrichtung zur thermischen Zersetzung von Harnstoff, welche mit einer Sprühdüse für eine wässrige Harnstofflösung versehen ist.

JP 2009-062860 und JP 2008-267269 beschreiben Abgasnachbehandlungssysteme umfassend eine Vorrichtung zur Herstellung von Ammoniak durch thermische Zersetzung von Harnstoff, welche eine Reaktorkammer, die mit einer Sprühdüse für eine wässrige Harnstofflösung und einem Hydrolysekatalysator versehen ist, umfasst.

Auch wenn Ammoniakgasgeneratoren seit geraumer Zeit bekannt sind, so ist dennoch bis heute keine Realisierung der Technik in einem Fahrzeug oder einer anderen Verwendung verwirklicht worden. Bis heute wurde das Konzept der Direkteinspritzung einer Ammoniakvorläufersubstanz in den Abgasstrom einer Brennkraftmaschine verfolgt, wobei diese Ammoniakvorläufersubstanz durch geeignete Maßnahmen im Abgasstrang in das eigentliche Reduktionsmittel zerfällt. Aufgrund von unvollständiger Zersetzung oder Nebenreaktionen von Zersetzungsprodukten im Abgasstrang werden jedoch immer wieder Ablagerungen beobachten, die zur Beeinträchtigung der im Abgasstrang weiterhin vorhandenen Katalysatoren und Filter führen.

Daher liegt der vorliegenden Erfindung die Aufgabe zugrunde einen Ammoniakgasgenerator bereitzustellen, der diese Nachteile des Standes der Technik überwindet. Der vorliegenden Erfindung liegt weiterhin die Aufgabe zugrunde einen Ammoniakgasgenerator bereitzustellen, der einen einfachen Aufbau aufweist sowie eine hohe Umsatzrate von Ammoniakvorläufersubstanzen in Ammoniakgas bereitstellt und einen langen Einsatz ohne Wartung erlaubt. Zudem soll der Ammoniakgasgenerator universell einsetzbar sein, wobei insbesondere auch verschiedenartige Ammoniakvorläufersubstanzen zum Einsatz gebracht werden können.

Diese Aufgaben werden gelöst durch einen Ammoniakgasgenerator gemäß Anspruch 1.

Damit ist gemäß einer ersten Ausführung ein Ammoniakgasgenerator zur Erzeugung von Ammoniak aus einer Lösung einer Ammoniakvorläufersubstanz Gegenstand der vorliegenden Erfindung, der eine Katalysatoreinheit umfasst, wobei die Katalysatoreinheit ihrerseits einen Katalysator zur Zersetzung und/ oder Hydrolyse von Ammoniakvorläufersubstanzen in Ammoniak und eine dem Katalysator vorgelagerte Mischkammer umfasst und der Katalysator ein Katalysatorvolumen V_{Kat} und die Mischkammer ein Mischkammervolumen V_{Misch} aufweist. Des weiteren umfasst der Ammoniakgasgenerator eine Eindüsungsvorrichtung zur Einbringung der Lösung der Ammoniakvorläufersubstanz in die Mischkammer und einen Auslass für das gebildete Ammoniakgas, wobei die Eindüsungsvorrichtung ihrerseits eine Düse umfasst, die einen theoretischen Sprühwinkel α von 10 ° bis 90 ° aufweist und der Abstand der Düsenöffnung zur Stirnfläche des Katalysators von 15 bis 2.000 mm beträgt. Der Ammoniakgasgenerator weist ferner eine thermische Isolationsschicht auf.

Hervorzuheben ist an dieser Stelle, dass ein Ammoniakgasgenerator gemäß der vorliegenden Erfindung eine separate Baueinheit zur Erzeugung von Ammoniak aus Ammoniakvorläufersubstanzen ist. Eine solche Baueinheit kann beispielsweise zur Reduktion von Stickoxiden in Industrieabgasen oder zur Abgasnachbehandlung von Abgasen aus Verbrennungsmotoren, wie beispielsweise Dieselmotoren eingesetzt werden. Dieser Ammoniakgasgenerator kann autark arbeiten oder auch mit Hilfe von Abgasseitenströmen betrieben werden, wobei jedoch in jedem Fall erst in einem nachfolgenden Prozessschritt eine Reduzierung von Stickoxiden mittels Ammoniak stattfindet. Falls ein erfindungsgemäßer Ammoniakgasgenerator als separates Bauteil in einer Abgasnachbehandlungsanlage eines Verbrennungsmotors, beispielsweise eines Dieselmotors verwendet wird, kann somit eine Reduzierung der Stickoxide im Abgasstrom vorgenommen werden, ohne weitere Katalysatoren zur Spaltung von Ammoniakvorläufersubstanzen oder andere Bauteile in den Abgasstrom selbst einzubringen. Der mit dem erfindungsgemäßen Ammoniakgasgenerator erzeugte Ammoniak kann somit bedarfsgerecht in den Abgasstrom eingeleitet werden. Eine eventuelle Verkürzung der Lebensdauer des SCR-Katalysators durch Verunreinigungen in Form von Ablagerungen aus beispielsweise Ammoniakvorläufersubstanzen oder Produkten der Spaltung von Ammoniakvorläufersubstanzen wird ebenfalls vermieden.

Erfindungsgemäß wird somit nicht eine Ammoniakvorläufersubstanz einem Abgasstrom zugeführt, wobei aus der Ammoniakvorläufersubstanz in situ dann Ammoniak gebildet wird, welcher im Abgasstrom als Reduktionsmittel wirkt. Vielmehr wird erfindungsgemäß dem Abgasstrom Ammoniak zugeführt, welcher zuvor in einer separaten Einheit, nämlich dem erfindungsgemäßen Ammoniakgasgenerator, gebildet worden ist. Erfindungsgemäß wird somit insbesondere zunächst in einem Ammoniakgasgenerator als separater Baueinheit aus einer Ammoniakvorläufersubstanz Ammoniak erzeugt. Dieser Ammoniak, und nicht die Ammoniakvorläufersubstanz, wird dann in einen Abgasstrom eingeleitet, insbesondere um dort eine Reduzierung von Stickoxiden zu bewirken.

Die Zuführung des im erfindungsgemäßen Ammoniakgasgenerator gebildeten Ammoniaks ins Abgas erfolgt vorzugsweise an einer Stelle nach dem Verbrennungsmotor und insbesondere an einer Stelle nach einem Oxidationskatalysator. Der im erfindungsgemäßen Ammoniakgasgenerator erzeugte Ammoniak wird insbesondere vor einem SCR-Katalysator in einen Abgasstrom zugeführt.

Erfindungswesentlich hierbei ist die Anordnung und Geometrie der Eindüsungsvorrichtung und des Hydrolysekatalysators innerhalb des Ammoniakgasgenerators, wobei die Eindüsungsvorrichtung ihrerseits eine Düse umfasst, die einen theoretischen Sprühwinkel α von 10 ° bis 90 ° aufweist, und der Abstand der Düsenöffnung zur Stirnfläche des Katalysators von 15 bis 2.000 mm beträgt.

Als theoretischer Sprühwinkel α (nachfolgend auch Sprühwinkel α genannt) gemäß der vorliegenden Erfindung soll ein solcher Sprühwinkel verstanden sein, der sich bei einem Betriebsdruck von 0,1 bis 10 bar auf die zu versprühende Lösung bei 25 °C und gegebenenfalls der Zerstäubungsluft im Betriebsbereich von 0,5 bis 10 bar (bei Zweistoffdüsen) am Austritt der Düsenöffnung oder der Düsenöffnungen einstellt, ohne dass ein Trägergas oder irgendeine sonstige Beeinflussung der versprühten Lösung vorhanden ist.

Überraschenderweise hat sich herausgestellt, dass nur solche Ammoniakgasgeneratoren mit Düsen, die einen theoretischen Sprühwinkel α von 10 ° bis 90 ° aufweisen eine akzeptable Umsetzung der Ammoniakvorläufersubstanzen mit einem Ammoniakbildungsgrad AG von größer 95 % ermöglichen, wobei gleichzeitig der Abstand von der Düsenöffnung zur Stirnfläche des Katalysators 15 bis 2.000 mm betragen muss. Eine Unter- oder Überschreitung der einzustellenden Abstände und/oder die Verwendung von Düsen mit anderen theoretischen Sprühwinkeln erzeugen nur eine unzureichende Gesamtmenge an Ammoniak pro Zeiteinheit und/oder zeigen einen nicht vollständigen Umsetzung der Ammoniakvorläufersubstanz in Ammoniak und/oder fördern Ablagerungen an der Innenwand des Generators oder der Katalysatorstirnfläche, die aus der Vorläufersubstanz und/oder Abbau- oder Reaktionsprodukten hiervon gebildet werden. Der Ammoniakbildungsgrad AG ist hierbei und im Folgenden definiert als die im Verfahren erzeugte Molmenge NH₃ bezogen auf die theoretisch bei vollständiger Hydrolyse der Ammoniakvorläufersubstanz zu erzeugende Molmenge an Ammoniak. Ein Ammoniakbildungsgrad von >95 % wird gemäß der vorliegenden Erfindung als vollständige Umsetzung betrachtet. Diese Beobachtungen wurden überraschender Weise unabhängig von der verwendeten Lösung gemacht.

Der Katalysatorstirnflächendurchmesser beträgt vorzugsweise mindestens 30 mm, insbesondere mindestens 50 mm und noch mehr bevorzugt mindestens 100 mm und höchstens 1.000 mm, mehr bevorzugt höchstens 800 mm und noch mehr bevorzugt höchstens 500 mm.

Wird beispielsweise eine Düse mit einem Sprühwinkel α von größer 90 ° verwendet, und der Abstand von 15 mm unterschritten, z.B. bei einem Katalysatorstirnflächendurchmesser von 30 mm, so wird die Innenwandung der Katalysatoreinheit übermäßig mit der eingedüsten Lösung benetzt, so dass Ablagerungen von nicht umgesetzten Ammoniakvorläufersubstanz und/oder Abbau- oder Reaktionsprodukten hiervon gebildet werden und innerhalb der Mischkammer ein regelrechtes Zuwachsen zu beobachten ist. Wird dagegen eine Düse verwendet, die einen Sprühwinkel α von weniger als 10 ° aufweist und der Abstand von 2000 mm überschritten, z.B. bei einem Katalysatorstirnflächendurchmesser von 1.000 mm, so wird eine zu kleine Oberfläche der Katalysatorstirnfläche mit der eingedüsten Lösung benetzt, so dass sich größere Tropfen auf der Oberfläche der Katalysatorstirnwand bilden, und eine zu hohe Konzentration an Ammoniakvorläufersubstanz pro Flächeneinheit der Stirnfläche zu verzeichnen ist und ein Zuwachsen der Katalysatorstirnfläche zu beobachten ist. In beiden Extremfällen ist zudem nur ein Ammoniakbildungsgrad von weniger als 95 % zu verzeichnen.

Idealerweise, d.h. um einen Umsatz der Ammoniakvorläufersubstanz in Ammoniak mit mehr als 95 % zu erreichen und eine Berührung der Vorläufersubstanz mit der Innenwand der Katalysatoreinheit zu vermeiden müssen bei der Eindosierung einige entscheidende erfindungsgemäße Bedingungen eingehalten werden. Würde die Vorläufersubstanz auch die Innenwandung der Katalysatoreinheit vor dem Hydrolysekatalysator benetzen, kann es durch eine ungenügend katalysierte Zersetzung zu unerwünschten Nebenreaktionen und damit in der Folge zu problematischen Ablagerungen an diesen Stellen kommen. Deshalb ist eine Eindüsung in der Art notwendig, dass bei gegebener Katalysatorstirnfläche der Spraykegeldurchmesser beim Auftreffen auf die Katalysatorstirnfläche höchstens 98 % des Katalysatordurchmessers beträgt. Dagegen muss der Spraykegeldurchmesser mindestens 80 % des Katalysatorstirnflächendurchmessers betragen, um eine zu hohe Konzentration bei gegebener Fläche und damit einer zu hohen Stirnflächenbelastung mit Vorläufersubstanz zu vermeiden. Eine zu hohe Belastung der Katalysatorstirnfläche führt zu einem ungenügenden Kontakt zum Katalysator und zu einer zu starken Abkühlung durch die verdampfende Flüssigkeit und damit ebenfalls zu einer unvollständigen Umsetzung und zu unerwünschten Nebenreaktionen verbunden mit Ablagerungen. Erfindungsgemäß ergeben sich dadurch einzuhaltende Kombinationen aus Sprühwinkel α der Düse und Abstand der Düsenöffnung zur gegebenen Katalysatorstirnfläche.

Somit ist gemäß einem weiteren Aspekt auch ein Verfahren zur Erzeugung von Ammoniak aus einer Lösung einer Ammoniakvorläufersubstanz unter Verwendung des Ammoniakgasgenerators Gegenstand der vorliegenden Erfindung in dem der Spraykegeldurchmesser höchstens 98 %, vorzugsweise höchstens 95 % und insbesondere höchstens 93 % und mindestens 80 %, vorzugsweise mindestens 83 % und insbesondere mindestens 95 % des Durchmessers des verwendeten Katalysators beträgt. Besonders bevorzugt ist ein solches Verfahren, in dem der Spraykegeldurchmesser höchstens 95 % und mindestens 80 % und ganz besonders bevorzugt höchstens 95 % und mindestens 85 % des Durchmessers des verwendeten Katalysators beträgt.

Der Spraykegel gemäß der vorliegenden Erfindung ist derjenige Kegel der zu versprühenden Lösung, der mittels einer Düse oder mehrerer Düsen mit definierten Sprühwinkel α erzeugt werden kann, wobei der Spraykegeldurchmesser derjenige Durchmesser ist, der bei Auftritt der Tröpfchen auf die Katalysatorstirnfläche erhalten wird. Dieser stellt sich aus dem Flüssigkeitsdruck von 0,1 bis 10 bar auf die zu versprühende Lösung bei 25 °C und gegebenenfalls der Zerstäubungsluft im Betriebsbereich von 0,5 bis 10 bar (bei Zweistoffdüsen) ein. Bei Verwendung eines erfindungsgemäß optionalen Trägergases stellt sich der Spraykegeldurchmesser aus dem Flüssigkeitsdruck von 0,1 bis 10 bar auf die zu versprühende Lösung bei 25 °C und gegebenenfalls der Zerstäubungsluft im Betriebsbereich von 0,5 bis 10 bar (bei Zweistoffdüsen) unter Verwendung von Trägergas ein.

Im Zusammenhang mit der vorliegenden Erfindung soll hierbei unter einer Eindüsungsvorrichtung jedwede Vorrichtung verstanden sein, die eine Lösung, vorzugsweise wässrige Lösung, einer Ammoniakvorläufersubstanz versprüht, vernebelt oder anderweitig zu Tropfen ausbildet, wobei die Lösung der Ammoniakvorläufersubstanz in Form von Tropfen ausgebildet wird, die insbesondere einen Tröpfchendurchmesser d₃₂ von kleiner als 25 µm aufweisen. Der Tropfendurchmesser d₃₂ bezieht sich im Zusammenhang mit der vorliegenden Erfindung auf den Sauterdurchmesser entsprechend der Deutschen Industrienorm DIN 66 141.

Damit ist gemäß einer bevorzugten Ausführung der vorliegenden Erfindung vorgesehen, dass die Eindüsungsvorrichtung ihrerseits eine Düse umfasst, die Tröpfchen mit einem Tröpfchendurchmesser d₃₂ von kleiner als 25 µm erzeugt. Gemäß der vorliegenden Erfindung ist hierbei weiterhin bevorzugt vorgesehen, dass die Düse Tröpfchen mit einem Tröpfchendurchmesser d₃₂ von kleiner als 20 µm und ganz besonders bevorzugt von kleiner als 15 µm erzeugt. Gleichzeitig oder unabhängig hiervon ist weiterhin bevorzugt, dass die Düse Tröpfchen mit einem Tröpfchendurchmesser d₃₂ von größer als 0,1 µm und insbesondere von größer als 1 µm erzeugt. Auch durch die Verwendung von solchen Düsen kann ein Ammoniakbildungsgrad von > 95 % (siehe oben) erreicht werden. Zudem kann eine besonders gleichmäßige Verteilung der Lösung auf die Katalysatorstirnfläche erfolgen.

Alternativ kann jedoch auch vorgesehen sein, dass die Eindüsungsvorrichtung einen sogenannten Flash-Verdampfer umfasst.

Überraschenderweise hat sich weiterhin gezeigt, dass im Falle eines Ammoniakgasgenerators mit einer NH₃-Leistung von 10 - 100 g/h erzeugtem NH₃ ein Katalysator mit einem Katalysatordurchmesser D_{Kat} von 30 bis 80 mm und eine Düse mit einem theoretischen Sprühwinkel α von 20 ° bis 60 ° am besten geeignet ist. Diese Werte ermöglichen ein Einsprühen der Lösung einer Ammoniakvorläufersubstanz, ohne dass die Innenwand der Katalysatoreinheit benetzt wird und dass gleichmäßig die Katalysatorstirnfläche für die Reaktion zu Ammoniak zur Verfügung steht und es nicht zu unerwünschten Nebenprodukten und Ablagerungen kommt. Es wird mit diesen Parametern gewährleistet, dass im dadurch festgelegten Katalysatorvolumen von 50 ml bis 1.000 ml eine Raumgeschwindigkeit im Bereich von 5.000 1/h bis 30.000 1/h eingehalten wird. Messungen haben ergeben, dass im Bereich dieser Raumgeschwindigkeiten eine vollständige Zersetzung (Umsatz > 95 %) von Ammoniak-Vorläufersubstanzen, insbesondere von Guanidiniumsalzen wie beispielsweise Guanidiniumformiat, in Ammoniak quantitativ erfolgen kann.

Somit ist auch ein Ammoniakgasgenerator mit einer Eindüsungsvorrichtung Gegenstand der vorliegenden Erfindung, die eine Düse umfasst, die einen Sprühwinkel α von 20 ° bis 90 °, insbesondere von 20 ° bis 60 ° und ganz besonders bevorzugt von 30 ° bis 60 ° aufweist und wobei der Durchmesser des Katalysators D_{Kat} 30 bis 80 mm beträgt. Weiterhin bevorzugt ist hierbei, dass der Abstand der Düsenöffnung zur Stirnfläche des Katalysators von 15 bis 200 mm, insbesondere von 50 bis 200 mm und ganz besonders bevorzugt von 50 bis 150 mm beträgt. Weiterhin bevorzugt ist hierbei, dass der der Katalysator eine Länge L von 30 mm bis 2000 mm, besonders bevorzugt von 70 mm bis 1000 mm und ganz besonders bevorzugt von 70 mm bis 700 mm aufweist.

Wird hingegen eine NH₃-Leistung von 100 - 1.000 g/h erzeugtes NH₃ definiert so hat sich gezeigt, dass Katalysatoren mit einem Katalysatordurchmesser D_{Kat} von 80 bis 450 mm notwendig sind, vorzugsweise in Verbindung mit einer Düse mit einem theoretischen Sprühwinkel α von 20 ° bis 60 °. Auch hierbei ist gewährleistet, dass keine Tröpfchen an der umgebenden Innenwand der Katalysatoreinheit auftreffen und die Tröpfchen ausreichend verteilt auf der Katalysatorstirnfläche landen und folglich eine vollständige Umsetzung (> 95 %) ohne Nebenprodukte und Ablagerungen ermöglicht wird. Ebenso wird mit dem sich daraus ergebenden Katalysatorgesamtvolumen von 1 bis 100 Litern eine Raumgeschwindigkeit von 5.000 1/h bis 30.000 1/h eingehalten wird. Denn im Bereich dieser Raumgeschwindigkeiten kann eine vollständige Zersetzung (Umsatz > 95 %) von Ammoniak-Vorläufersubstanzen, insbesondere von Guanidiniumsalzen wie beispielsweise Guanidiniumformiat, in Ammoniak quantitativ erfolgen.

Somit ist auch ein Ammoniakgasgenerator mit einer Eindüsungsvorrichtung Gegenstand der vorliegenden Erfindung, die eine Düse umfasst, die einen Sprühwinkel α von 20 ° bis 90 °, insbesondere von 20 ° bis 60 ° und ganz besonders bevorzugt von 30 ° bis 60 ° aufweist und wobei der Durchmesser des Katalysators D_{Kat} 80 bis 450 mm beträgt. Weiterhin bevorzugt ist hierbei, dass der Abstand der Düsenöffnung zur Stirnfläche des Katalysators von 15 bis 500 mm, insbesondere von 50 bis 500 mm und ganz besonders bevorzugt von 100 bis 400 mm beträgt. Weiterhin bevorzugt ist hierbei, dass der der Katalysator eine Länge L von 30 mm bis 2000 mm, besonders bevorzugt von 70 mm bis 1000 mm und ganz besonders bevorzugt von 70 mm bis 700 mm aufweist.

Im Falle einer NH₃-Leistung von 1.000 - 50.000 g/h erzeugtes NH₃ hat sich gezeigt, dass Katalysatoren mit einem Katalysatordurchmesser D_{Kat} von 450 bis 1.000 mm notwendig sind, vorzugsweise in Verbindung mit einer Düse mit einem theoretischen Sprühwinkel α von 20 ° bis 60 °. Aus dieser Katalysatorgröße ergibt sich, dass so vor den Katalysator eingesprüht werden kann, dass keine Tröpfchen an der umgebenden Innenwand der Katalysatoreinheit auftreffen, diese Tröpfchen ausreichend verteilt auf der Katalysatorstirnfläche landen und folglich eine vollständige Umsetzung (> 95 %) ohne Nebenprodukte und Ablagerungen ermöglicht wird. Ebenso wird mit dem sich daraus ergebenden Katalysatorgesamtvolumen von 100 bis 1.000 Litern eine Raumgeschwindigkeit von 5.000 1/h bis 30.000 1/h eingehalten wird. Denn im Bereich dieser Raumgeschwindigkeiten kann eine vollständige Zersetzung (Umsatz > 95 %) von Ammoniak-Vorläufersubstanzen, insbesondere von Guanidiniumsalzen wie beispielsweise Guanidiniumformiat, in Ammoniak quantitativ erfolgen.

Somit ist auch ein Ammoniakgasgenerator mit einer Eindüsungsvorrichtung Gegenstand der vorliegenden Erfindung, die eine Düse umfasst, die einen Sprühwinkel α von 20 ° bis 90 °, insbesondere von 30 ° bis 90 ° und ganz besonnders bevorzugt von 20 ° bis 60 ° aufweist und wobei der Durchmesser des Katalysators D_{Kat} 450 bis 1.000 mm beträgt. Weiterhin bevorzugt ist hierbei, dass der Abstand der Düsenöffnung zur Stirnfläche des Katalysators von 15 bis 1500 mm, insbesondere von 50 bis 1000 mm und ganz besonders bevorzugt von 300 bis 1000 mm beträgt. Weiterhin bevorzugt ist hierbei, dass der der Katalysator eine Länge L von 30 mm bis 2000 mm, besonders bevorzugt von 70 mm bis 1000 mm und ganz besonders bevorzugt von 70 mm bis 700 mm aufweist.

Ganz besonders bevorzugt ist ein Ammoniakgasgenerator, der eine Katalysatoreinheit umfasst, dessen Katalysator ein Verhältnis Durchmesser D_{Kat} des Katalysators zur Länge L der Katalysators von 1:1 bis 1:5, insbesondere von 1:2 bis 1:4 und ganz besonders bevorzugt von 1 : 3 aufweist. Der Katalysatordurchmesser D_{Kat} beträgt vorzugsweise 20 bis 2000 mm, insbesondere 30 bis 1000 mm und noch mehr bevorzugt 30 bis 100 mm. Es kann jedoch auch vorgesehen sein, dass der Durchmesser D_{Kat} 30 bis 80 mm, 80 bis 450 mm oder 450 bis 1.000 mm beträgt.

Im Zusammenhang mit der vorliegenden Erfindung und insbesondere mit den besonderen Auslegung für einen Ammoniakgasgenerator ist weiterhin vorgesehen, dass der Abstand der Düsenöffnung zur Stirnfläche des Katalysators von insbesondere 15 bis 1500 mm und besonders bevorzugt 15 bis 1000 mm und ganz besonders bevorzugt 15 bis 800 mm aufweisen kann. Unabhängig oder gleichzeitig kann jedoch auch vorgesehen sein, dass der Abstand der Düsenöffnung zur Stirnfläche des Katalysators mindestens 30 mm, weiterhin bevorzugt mindestens 40 mm, besonders bevorzugt mindestens 50 mm, besonders bevorzugt mindestens 60 mm, besonders bevorzugt mindestens 100 mm und ganz besonders bevorzugt mindestens 300 mm und weiterhin unabhängig oder gleichzeitig höchstens 1500 mm, insbesondere höchstens 1000 mm, insbesondere höchstens 800 mm, insbesondere höchstens 500 mm, insbesondere höchstens 400 mm, besonders bevorzugt höchstens 200 mm beträgt und ganz insbesondere höchstens 150 mm.

Gemäß einer Weiterbildung der vorliegenden Erfindung ist auch vorgesehen, dass das Verhältnis des Volumens der Mischkammer V_{Misch} zum Volumen des Katalysators V_{Kat} dem Verhältnis von 1,5 : 1 bis 5 : 1 entspricht. Überraschender weise hat sich gezeigt, dass die eingesprühte Ammoniakvorläufersubstanz dann vollständig (Umsatz > 95 %) in Ammoniak zersetzt werden kann, wenn die Tröpfchen der Lösung bereits vor dem Auftreffen auf die Katalysatorstirnfläche teilweise verdampft werden. Dies kann dadurch gewährleistet sein, dass das Volumen der Mischkammer größer ist als das Volumen des Katalysators. Durch ein teilweises Verdampfen der Tröpfchen wird der Lösung bereits genügend Energie zugeführt, so dass ein zu starkes Abkühlen an der Katalysatorstirnfläche durch zu große Tropfen vermieden wird und damit einer schlechteren Zersetzung bzw. Nebenproduktbildung entgegengewirkt wird. Außerdem wird durch ein entsprechendes Mischkammervolumen V_{Misch} sichergestellt, dass die versprühte Ammoniakvorläufersubstanz als Aerosol homogen im Trägergasstrom verteilt über den Querschnitt auf dem Katalysator auftrifft und Spots mit zu hoher Konzentration, was wiederum eine schlechtere Umsetzung zur Folge hätte, vermeidet. Ganz besonders bevorzugt ist hierbei vorgesehen, dass das Verhältnis des Volumens der Mischkammer V_{Misch} zum Volumen des Katalysators V_{Kat} von 2,5 : 1 bis 5 : 1, besonders bevorzugt 3 : 1 bis 5 : 1 und ganz besonders bevorzugt 3,5 : 1 bis 5 : 1 beträgt.

Das Volumen des Katalysators V_{Kat} beträgt vorzugsweise 50 ml bis 1.000 l. Das Volumen der Mischkammer V_{Misch} beträgt vorzugsweise mindestens 10 ml, bevorzugt mindestens 50 ml, weiterhin bevorzugt mindestens 100 ml, weiterhin bevorzugt mindestens 200 ml, weiterhin bevorzugt mindestens 1.000 ml, weiterhin bevorzugt mindestens 2.000 ml und weiterhin bevorzugt mindestens 5.000 ml. Gleichzeitig oder unabhängig hiervon beträgt das Volumen der Mischkammer V_{Misch} bevorzugt höchstens 2,5 l, weiterhin bevorzugt höchstens 10 l, weiterhin bevorzugt höchstens 80 l, weiterhin bevorzugt höchstens 500 l, weiterhin bevorzugt höchstens 1.200 I und weiterhin bevorzugt höchstens 2.000 l.

Ein wesentliches Bauteil der vorliegenden Erfindung ist die Eindüsungsvorrichtung, die mindestens eine Düse zur Einbringung der Lösung der Ammoniakvorläufersubstanz in die Mischkammer umfasst. Diese Düse kann gemäß der vorliegenden Erfindung vorzugsweise eine sogenannte Einstoffdüse oder eine Zweistoffdüse sein. Alternativ kann jedoch auch vorgesehen sein, dass die Eindüsungsvorrichtung als Düse einen sogenannten Flash-Verdampfer umfasst. In einem Flashverdampfer wird zusätzlich Energie in Form von Wärme in die Flüssigkeit zugeführt, so dass sich z.T. ein überkritischer Zustand einstellt und sich nach der Drosselstelle bei der Entspannung in der Düse ein schlagartiger bzw. schnellerer Phasenübergang ergibt. Besonders bevorzugt ist jedoch eine Zweistoffdüse.

Gemäß einer besonders bevorzugten Variante kann insbesondere vorgesehen sein, dass die Eindüsungsvorrichtung ihrerseits eine Düse umfasst, die eine sogenannte Zweistoffdüse ist. Unter einer Zweistoffdüse wird hierbei eine Düse verstanden, die als Treibmittel ein unter Druck stehendes Gas, im Allgemeinen Luft, zum Oberflächenaufbruch der flüssigen Phase und damit zur Tröpfchenbildung verwendet. Dies unter Druck stehende Gas wird auch Zerstäubungsluft bezeichnet. Diese Art der Düse ermöglicht eine besonders feine Verteilung der Ammoniakvorläufersubstanz und einen Tröpfchendurchmesser d₃₂ von kleiner als 25 µm, insbesondere von kleiner als 20 µm.

Das Treibmittel, insbesondere die Zerstäubungsluft wird dabei vorzugsweise zusammen mit der Lösung der Ammoniakvorläufersubstanz durch die gleiche Düsenöffnung in die Mischkammer eingebracht.

Unabhängig oder gleichzeitig kann die Eindüsungsvorrichtung auch mindestens zwei Düsen zur Einbringung der Ammoniakvorläufersubstanz in die Mischkammer aufweisen, die insbesondere zugleich oder separat voneinander schaltbar sind.

Gemäß einer Weiterbildung des Ammoniakgasgenerators ist vorgesehen, dass die Düse, insbesondere eine Zweistoffdüse, einen Sprühwinkel α von mindestens 10 °, insbesondere mindestens 20 °, insbesondere mindestens 25 °, besonders bevorzugt von mindestens 30 °, besonders bevorzugt von mindestens 35 °, besonders bevorzugt von mindestens 40 ° und ganz besonders bevorzugt von mindestens 45 ° aufweist. Gleichzeitig oder unabhängig hiervon sind weiterhin solche Düsen bevorzugt, die einen theoretischen Sprühwinkel α von höchstens 90 °, insbesondere von höchstens 80 °, insbesondere von höchstens 75 °, insbesondere von höchstens 70 °, besonders bevorzugt von höchstens 65 °, besonders bevorzugt von höchstens 60 °, besonders bevorzugt von höchstens 55 ° und ganz besonders bevorzugt von höchstens 50 ° aufweisen. Wie bereits ausgeführt, kann durch den gezielten Einsatz einer Düse mit einem definierten Sprühwinkel α eine gleichmäßige Verteilung der einzusprühenden Lösung erreicht werden, ohne dass es zu Ablagerungen an den Wänden oder der Katalysatorstirnfläche kommt.

Als weitere Maßnahme, damit die Innenwand der Katalysatoreinheit nicht mit der Lösung der Ammoniakvorläufersubstanz benetzt wird, kann gemäß einer Weiterführung der Erfindung vorgesehen sein, dass der Ammoniakgasgenerator einen weiteren Einlass für ein Trägergas umfasst, der einen tangentialen Trägergasstrom in Bezug auf die in die Mischkammer eingedüste Lösung erzeugt. Alternativ kann auch vorgesehen sein, dass um die Düse herum mindestens ein Einlass für Trägergas vorgesehen ist, der derart ausgebildet ist, dass das Trägergas einen Mantel um die in die Mischkammer eingebrachte Lösung bildet. Somit wird die eingesprühte Lösung mit einem Mantel aus Trägergas eingehüllt, so dass keine Benetzung der Innenwand beobachtet wird.

In einer weiteren Ausführungsform betrifft die Erfindung deshalb einen Ammoniakgasgenerator, welcher wenigstens einen Einlass für ein Trägergas umfasst. Der Einlass befindet sich vorzugsweise in der Mischkammer und ist insbesondere separat bzw. getrennt von der Düsenöffnung, durch die die Lösung der Ammoniakvorläufersubstanz eingebracht wird. Das Trägergas kann somit unabhängig von der Ammoniakvorläufersubstanz-Lösung eingebracht werden. Bevorzugt erzeugt der Einlass einen tangentialen oder einen parallelen Trägergasstrom in Bezug auf die in die Mischkammer eingedüste Lösung. Für einen parallelen Trägergasstrom werden vorzugsweise eine oder mehrere Einlassöffnungen für Trägergas in der Wandung, in der sich auch die Eindüsungsvorrichtung zur Einbringung der Lösung der Ammoniakvorläufersubstanz befindet, angeordnet.

Trägergas und insbesondere ein tangentialer oder paralleler Trägergasstrom, wird vorzugsweise mit einer Temperatur von bis zu 550 °C, bevorzugt mit einer Temperatur von 250 bis 550 °C, weiterhin bevorzugt mit einer Temperatur von 250 bis 400 °C und ganz besonders bevorzugt mit einer Temperatur von 300 bis 350 °C in die Mischkammer eingeführt.

Überraschenderweise hat sich herausgestellt, dass durch einen tangentialen Trägergasstrom Ablagerungen an den Wandungen der Katalysatoreinheit im Bereich der Mischungskammer weiter unterbunden werden können und eine dauerhaft gute Durchmischung von Trägergas und Lösung der Ammoniakvorläufersubstanz bereitgestellt werden kann. Somit wird ein Benetzen der Wandung der Katalysatoreinheit im Bereich der Mischkammer fast vollständig unterbunden. Durch den tangentialen Trägergasstrom wird eine Wirbelschleierströmung mit den Tröpfchen erzeugt, die axial in Richtung des Hydrolysekatalysators auf die Hydrolysekatalysatorstirnfläche geführt wird. Diese Wirbelschleierströmung ermöglicht eine sehr gute Umsetzung zum Ammoniak am Katalysator. Die tangentiale Zuführung des Trägergases erfolgt im Kopfbereich des Generators, in Höhe der Sprüheinrichtung der Ammoniakvorläuferlösung in die Katalysatoreinheit bzw. in die Mischkammer. Dabei wird der Gasstrom möglichst flach an der Wandung der Mischkammer in der Art eingeleitet, dass sich eine abwärtsgerichtete Wirbelströmung in der Katalysatoreinheit in Richtung Katalysatorstirnfläche einstellt.

Ein ähnlicher Effekt wird erzeugt, wenn eine Düse verwendet wird, die eine erste Anzahl an Düsenöffnungen zur Einbringung der Lösung der Ammoniakvorläufersubstanz in die Katalysatoreinheit aufweist, die von einer zweiten Anzahl an Düsenöffnungen zur Einbringung eines Trägergases oder Zerstäubungsluft in die Katalysatoreinheit ringförmig umgeben ist.

Insbesondere wird mit der vorliegenden Erfindung ein Ammoniakgasgenerator bereitgestellt, der autark vom Abgasstrom, das heißt ohne Zuhilfenahme eines Abgasstroms aus einem Verbrennungsgas als Trägergas arbeitet. Insbesondere wird in dem erfindungsgemäßen Ammoniakgasgenerator Ammoniak aus einer Ammoniakvorläufersubstanz gebildet ohne Gegenwart eines Abgasstroms. Vielmehr wird dann vorzugsweise das gebildete Ammoniak erst in einem weiteren Schritt einem Abgasstrom als Reduktionsmittel zugeführt.

Es kann jedoch auch vorgesehen sein, dass als Trägergas ein Teilstrom des Abgases, das von Stickoxiden befreit werden soll, verwendet wird. Hierbei hat sich gezeigt, dass ein Ammoniakgasgenerator gemäß der vorliegenden Erfindung mit höchstens 20 %, insbesondere höchstens 15 %, insbesondere 10 % und ganz besonders bevorzugt höchstens 5 % Anteil eines Teilstroms betrieben werden sollte. Es kann auch vorgesehen sein, dass als Trägergas ein Abgasteilstrom eingesetzt wird, der mindestens 0,1 % des gesamten Abgases enthält und weiterhin bevorzugt weniger als 4 % und ganz besonders bevorzugt weniger als 2 % des gesamten Abgases. Zudem weist ein erfindungsgemäßer Ammoniakgasgenerator mindestens eine thermische Isolationsschicht auf.

Als Teilstrom des Abgases wird der prozentuale Anteil betrachtet, der als Massen-Prozent dem Hauptabgasstrom abgezweigt wird und als Transport- oder Trägergasstrom durch den Generator geleitet wird.

Grundsätzlich kann erfindungsgemäß jedes Gas als Trägergasstrom eingesetzt werden. Da der Trägergasstrom vorzugsweise eine Temperatur von 250 °C bis 550 °C aufweisen sollte, wird für eine gute Energieeffizienz vorzugsweise ein Gas verwendet, welches bereits erwärmt vorliegt, wie z.B. Ladeluft oder ein Teil des Abgasstroms. Es ist aber auch möglich, ein beliebiges Trägergas auf die gewünschte Temperatur zu erwärmen.

Des Weiteren kann vorgesehen sein, dass der Ammoniakgasgenerator weiterhin eine Dosiereinheit zur Dosierung der Lösung der Ammoniakvorläufersubstanz umfasst, die der Eindüsungsvorrichtung vorgeschaltet ist. Somit kann eine präzise Regelung des zu Erzeugenden Ammoniaks über diese Dosiereinheit erfolgen. Wird beispielsweise ein vermehrter Ausstoß an Stickoxiden im Abgas eines Motors verzeichnet, so kann über die gezielte Steuerung der mit der Eindüsungsvorrichtung eingedüsten Menge an Vorläufersubstanz eine definierte Menge an Ammoniak freigesetzt werden.

Als Ammoniakvorläufersubstanzen werden gemäß der vorliegenden Erfindung chemische Substanzen verstanden, die in eine Lösung überführt werden können und die Ammoniak mittels physikalischer und/oder chemischer Prozesse abspalten oder in sonstiger Form freisetzen können. Als Ammoniakvorläuferverbindungen können gemäß der vorliegenden Erfindung insbesondere Harnstoff, Harnstoffderivate, Guanidine, Biguanidine sowie Salze dieser Verbindungen sowie Salze des Ammoniaks eingesetzt werden. Insbesondere können gemäß der vorliegenden Erfindung Harnstoff und Guanidine oder Salze hiervon eingesetzt werden. Insbesondere können solche Salze eingesetzt werden, die aus Guanidinen und organischen oder anorganischen Säuren gebildet werden. Als besonders bevorzugt sind hierbei Guanidiniumsalze der allgemeinen Formel (I) anzusehen, 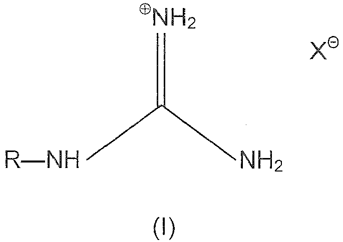 wobei
- R =: H, NH₂ oder C₁-C₁₂-Alkyl,
- X^{Θ} =: Acetat, Carbonat, Cyanat, Formiat, Hydroxid, Methylat oder Oxalat bedeuten.

### Besonders bevorzugt ist Guanidiniumformiat.

Im Rahmen der vorliegenden Erfindung können diese Guanidiniumsalze als Einzelsubstanz oder als Mischung aus zwei oder mehreren unterschiedlichen Guanidiniumsalzen verwendet werden. Gemäß einer bevorzugten Ausführungsform werden die erfindungsgemäß eingesetzten Guanidiniumsalze mit Harnstoff und/oder Ammoniak und/oder Ammoniumsalzen kombiniert. Alternativ können gemäß einer weiteren Ausführung der vorliegenden Erfindung jedoch auch wässrige Harnstofflösungen eingesetzt werden. Die Mischungsverhältnisse von Guanidiniumsalz mit Harnstoff sowie Ammoniak bzw. Ammoniumsalzen kann in weiten Grenzen variiert werden. Es hat sich jedoch als besonders vorteilhaft erwiesen, wenn die Mischung von Guanidiniumsalz und Harnstoff einen Guanidiniumsalz-Gehalt von 5 bis 60 Gew.-% und einen Harnstoff-Gehalt von 5 bis 40 Gew.-%, insbesondere von 5 bis 35 Gew.-% besitzt. Des Weiteren sind Mischungen von Guanidiniumsalzen und Ammoniak bzw. Ammoniumsalzen mit einen Gehalt an Guanidiniumsalz von 5 bis 60 Gew.-% und von Ammoniak bzw. Ammoniumsalz von 5 bis 40 Gew.-% als bevorzugt anzusehen. Alternativ kann jedoch auch eine Harnstoff-Lösung insbesondere eine wässrige Harnstofflösung verwendet werden.

Als Ammoniumsalze haben sich hierbei vor allem Verbindungen der allgemeinen Formel (II) bewährt 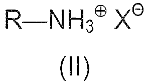 wobei
R = H, NH₂ oder C₁-C₁₂-Alkyl,
X^{Θ} = Acetat, Carbonat, Cyanat, Formiat, Hydroxid, Methylat oder Oxalat bedeuten.

Die erfindungsgemäß eingesetzten Ammoniakvorläufersubstanzen, insbesondere Guanidiniumsalze, sowie ggf. die weiteren Komponenten, bestehend aus Harnstoff bzw. Ammoniumsalzen kommen in Form einer Lösung zum Einsatz, wobei als Lösemittel vor allem Wasser und/oder ein C₁-C₄-Alkohol bevorzugt eingesetzt werden. Die wässrigen und/oder alkoholischen Lösungen weisen hierbei einen bevorzugten Feststoffgehalt von 5 bis 85 Gew.-%, insbesondere 30 bis 80 Gew.-%, auf.

Dabei hat sich überraschend gezeigt, dass gemäß der vorliegenden Erfindung sowohl wässrige Guanidiniumformiatlösung in der Konzentration von 20 bis 60 Gew.-%, als auch wässrige Harnstofflösung in der Konzentration von 25 bis 40 Gew.-% als auch wässrige Mischungen aus Guanidiniumformiat und HarnstoffLösungen, wobei Guanidiniumformiat und Harnstoff in einer Konzentration von 5 bis 60 Gew.-% Guanidiniumformiat und 5 bis 40 Gew.-% Harnstoff in der Mischung enthalten ist, besonders gut eingesetzt werden können.

Die wässrigen Lösungen der Ammoniakvorläufersubstanzen, insbesondere der Guanidiniumsalze, der Gemische von Guanidiniumsalzen oder der Guanidiniumsalze in Kombination mit Harnstoff in Wasser besitzen hierbei ein bevorzugtes Ammoniak-Bildungspotential von 0,2 bis 0,5 kg Ammoniak pro Liter Lösung, insbesondere 0,25 bis 0,35 kg Ammoniak pro Liter Lösung.

Des Weiteren soll unter einer Katalysatoreinheit gemäß der vorliegenden Erfindung eine Baueinheit verstanden sein, die ein Gehäuse zur Aufnahme eines Katalysators, eine in Strömungsrichtung dem Katalysator vorgelagerte Mischkammer und mindestens einen Katalysator zur Zersetzung und/ oder Hydrolyse von Ammoniakvorläufersubstanzen in Ammoniak umfasst, wobei der Katalysator ein Katalysatorvolumen V_{Kat} und die Mischkammer ein Mischkammervolumen V_{Misch} aufweist. Gegebenenfalls kann die Katalysatoreinheit zusätzlich eine dem Katalysator in Strömungsrichtung nachgelagerte Auslasskammer zum Auslass des gebildeten Ammoniakgases umfassen.

Als Katalysator zur Zersetzung und/ oder Hydrolyse von Ammoniakvorläufersubstanzen kann im Rahmen der vorliegenden Erfindung jeder Katalysator verwendet werden, der die Freisetzung von Ammoniak aus der Ammoniakvorläufersubstanz unter katalytischen Bedingungen ermöglicht. Ein bevorzugter Katalysator hydrolisiert die Ammoniakvorläufersubstanz zu Ammoniak und weiteren unschädlichen Stoffen wie Stickstoff und Kohlendioxid und Wasser. Es handelt sich also vorzugsweise um einen Hydrolysekatalysator. Wird beispielsweise eine Guanidiniumsalz-Lösung, insbesondere eine Guanidiniumformiat-Lösung oder eine Harnstoff-Lösung oder Mischungen hiervon verwendet, so kann die katalytische Zersetzung zu Ammoniak in Gegenwart von katalytisch aktiven, nicht oxidationsaktiven Beschichtungen aus Oxiden, ausgewählt aus der Gruppe Titandioxid, Aluminiumoxid und Siliciumdioxid sowie deren Mischungen, oder/und hydrothermal stabilen Zeolithen, die vollständig oder teilweise metallausgetauscht sind, insbesondere Eisenzeolithen vom ZSM 5- oder BEA-Typ, vorgenommen werden. Als Metalle kommen hierbei insbesondere die Nebengruppen-Elemente und vorzugsweise Eisen oder Kupfer in Frage. Die Metalloxide wie Titanoxid, Aluminiumoxid sowie Siliciumdioxid werden vorzugsweise auf metallischen Trägermaterialien wie z. B. Heizleiter-Legierungen (insbesondere Chrom-Aluminium-Stähle) aufgebracht.

Besonders bevorzugte Katalysatoren sind Hydrolysekatalysatoren, die insbesondere katalytisch aktive Beschichtungen aus Titandioxid, Aluminiumoxid und Siliciumdioxid sowie deren Mischungen hiervon umfassen.

Alternativ kann die katalytische Zersetzung der Guanidiniumformiat-Lösungen bzw. der übrigen Komponenten auch zu Ammoniak und Kohlendioxid erfolgen, wobei katalytisch aktive Beschichtungen aus Oxiden, ausgewählt aus der Gruppe Titandioxid, Aluminiumoxid und Siliciumdioxid sowie deren Mischungen, oder/und hydrothermal stabilen Zeolithen, die vollständig oder teilweise metallausgetauscht sind, eingesetzt werden können, die mit Gold und/oder Palladium als oxidationsaktive Komponenten imprägniert sind. Die entsprechenden Katalysatoren mit Palladium und/oder Gold als Aktivkomponenten weisen vorzugsweise einen Edelmetallgehalt von 0,001 bis 2 Gew.-%, insbesondere 0,01 bis 1 Gew.-% auf. Mit Hilfe derartiger Oxidationskatalysatoren ist es möglich, die unerwünschte Bildung von Kohlenmonoxid als Nebenprodukt bei der Zersetzung des Guanidiniumsalzes bereits bei der Ammoniakerzeugung zu vermeiden.

Bevorzugt wird für die katalytische Zersetzung des Guanidiniumformiats sowie ggf. den weiteren Komponenten eine katalytische Beschichtung mit Palladium oder/und Gold als Aktivkomponenten mit einem Edelmetallgehalt von 0,001 bis 2 Gew.-%, insbesondere 0,01 bis 1 Gew.-% eingesetzt.

Somit ist auch ein Ammoniakgasgenerator Gegenstand der vorliegenden Erfindung, der einen Katalysator umfasst, der insbesondere ein Hydrolysekatalysator ist, wobei der Katalysator eine katalytisch aktive Beschichtung aufweist, die mit Gold und/ oder Palladium imprägniert ist, insbesondere mit einem Gehalt an Gold und/oder Palladium von 0,001 bis 2 Gew.-% (bezogen auf die katalytische Beschichtung). Weiterhin bevorzugt weist dieser Katalysator eine katalytisch aktive Beschichtung aus Oxiden ausgewählt aus der Gruppe Titandioxid, Aluminiumoxid und Siliciumdioxid sowie deren Mischungen, oder/und hydrothermal stabilen Zeolithen auf, die mit Gold und/oder Palladium imprägniert ist, wobei weiterhin bevorzugt der Gehalt an Gold und/oder Palladium 0,001 bis 2 Gew.-% (bezogen auf die katalytische Beschichtung) beträgt.

Es hat sich ergeben, dass für eine vollständige katalytische Umsetzung der Ammoniakvorläufersubstanzen vorzugsweise Katalysatoren mit einer Katalysatorzellenzahl von mindestens 60 cpsi (cpsi: cells per square inch, Zellenanzahl an der Stirnfläche des Katalysators) und den bereits oben beschriebenen Katalysatorvolumina eingesetzt werden. Dabei begrenzt der ansteigende Gegendruck (Druckverlust über den Katalysator) die Katalysatorzellenzahl auf höchstens 800 cpsi für eine Anwendung in einem Ammoniakgasgenerator. Besonders bevorzugt sind solche Katalysatoren, die eine Katalysatorzellenzahl von 60 bis 600 cpsi, insbesondere von 60 bis 500 cpsi und ganz besonders bevorzugt von 60 bis 400 cpsi aufweisen.

Es ist im Rahmen der vorliegenden Erfindung möglich, dass man einen Hydrolysekatalysator einsetzt, der in Strömungsrichtung aus mehreren Abschnitten, insbesondere aus zwei Abschnitten besteht, wobei der erste Abschnitt nicht oxidationsaktive Beschichtungen und der zweite Abschnitt oxidationsaktive Beschichtungen enthält. Vorzugsweise besteht 5 bis 90 Vol.-% dieses Katalysators aus nicht oxidationsaktiven Beschichtungen und 10 bis 95 Vol-% aus oxidationsaktiven Beschichtungen. Insbesondere bestehen 15 bis 80 Vol-% dieses Katalysators aus nicht oxidationsaktiven Beschichtungen und 20 bis 85 Vol-% aus oxidationsaktiven Beschichtungen. Alternativ kann man die Hydrolyse auch in Gegenwart von zwei hintereinander angeordneten Katalysatoren durchführen, wobei der erste Katalysator nicht oxidationsaktive Beschichtungen und der zweite Katalysator oxidationsaktive Beschichtungen enthält. Weiterhin bevorzugt kann es sich bei dem ersten Hydrolysekatalysator auch um einen beheizten Katalysator und bei dem zweiten Hydrolysekatalysator um einen nicht beheizten Katalysator handeln.

Darüber hinaus kann vorgesehen sein, dass man einen Hydrolysekatalysator einsetzt, der aus zwei Abschnitten besteht, wobei der in Strömungsrichtung angeordnete erste Abschnitt des Hydrolysekatalysators in Form eines beheizten Katalysators und dessen in Strömungsrichtung angeordneter zweiter Abschnitt in Form eines nicht beheizten Katalysators vorliegt. Vorzugsweise besteht der Katalysator zu 5 bis 50 Vol.-% aus dem ersten Abschnitt und zu 50 bis 95 Vol-% aus dem zweiten Abschnitt.

Hinsichtlich der Ausgestaltung der Katalysatoreinheit hat sich in Tests herausgestellt, dass eine zylindrische Bauform besonders gut geeignet ist. Insbesondere kann bei einer zylindrischen Bauform der optional eingesetzte tangentiale Trägergasstrom seine volle Wirkung entfalten. Andere Bauformen sind hingegen weniger geeignet, da hierbei eine zu starke Verwirbelung zu beobachten ist. Somit ist auch ein Ammoniakgasgenerator Gegenstand der vorliegenden Erfindung, der eine Katalysatoreinheit umfasst, die in Form eines Zylinders ausgebildet ist.

Des Weiteren ist gemäß der vorliegenden Erfindung vorgesehen, dass der Ammoniakgasgenerator mindestens eine thermische Isolationsschicht aufweist.

Weitere Parameter, die vorzugsweise beim Betrieb des erfindungsgemäßen Ammoniakgasgenerators eingehalten werden, sind wie folgt
- Der Dosiermassenstrom der Lösung der Ammoniakvorläufersubstanz pro Stunde beträgt vorzugsweise von 50 g/h bis 280 g/h, insbesondere von 100 g/h bis 200 g/h.
- Der Massenstrom an Trägergas beträgt vorzugsweise 1 bis 10 kg/h, insbesondere 3 bis 7 kg/h.
- Der Massenstrom an Zerstäubungsluft beträgt vorzugsweise 0,14 bis 1,43 kg/h, insbesondere 0,5 bis 1 kg/h.
- Die Zusatzheizenergiemenge beträgt vorzugsweise von 0 bis 150 W, insbesondere 50 bis 100 W.
- Die Katalysatorstirnflächentemperatur wird vorzugsweise auf 280 bis 500 °C, insbesondere auf 300 bis 400 °C eingestellt.
- Die Katalysatorauslasstemperatur wird vorzugsweise auf 250 bis 450 °C, insbesondere auf 280 bis 380 °C eingestellt.
- Die Katalysatorraumgeschwindigkeit beträgt vorzugsweise 5.000 bis 30.000 1/h, insbesondere 10.000 bis 20.000 1/h.
- Der Dosierdruck der Flüssigkeit der Ammoniakvorläufersubstanz beträgt vorzugsweise 1 bis 8 bar, insbesondere 1,5 bis 3 bar.
- Die Katalysatorstirnflächenbelastung pro Stunde beträgt vorzugsweise 0,53 bis 3,45 g/(h x cm²), insbesondere 1 bis 2 g/(h x cm²).
- Der spezifische Enthalpiestrom beträgt vorzugsweise 8.000 bis 25.000 kJ/kg, insbesondere 10.000 bis 20.000 kJ/kg.

Die hierin beschriebenen Ammoniakgasgeneratoren sind aufgrund ihrer kompakten Bauweise besonders für den Einsatz in Industrieanlagen, in Verbrennungsmotoren wie beispielsweise Dieselmotoren und Benzinmotoren, sowie Gasmotoren geeignet. Daher gehört zum Umfang der vorliegenden Erfindung auch die Verwendung eines Ammoniakgasgenerators gemäß der beschriebenen Art zur Reduktion von Stickoxiden in Abgasen aus Industrieanlagen, aus Verbrennungsmotoren wie beispielsweise Dieselmotoren und Benzinmotoren, sowie aus Gasmotoren.

Im Folgenden wird die vorliegende Erfindung anhand von Zeichnungen und zugehörigen Beispielen näher erläutert. Hierbei zeigt
- Figur 1:: eine schematische Ansicht eines ersten Ammoniakgasgenerators im axialen Querschnitt
- Figur 2:: ein schematischer Aufbau einer Abgasanlage in einem Fahrzeug
- Figur 3:: einen radialen Querschnitt der Mischkammer (Draufsicht) im Bereich der tangentialen Trägergasstromzuführung.

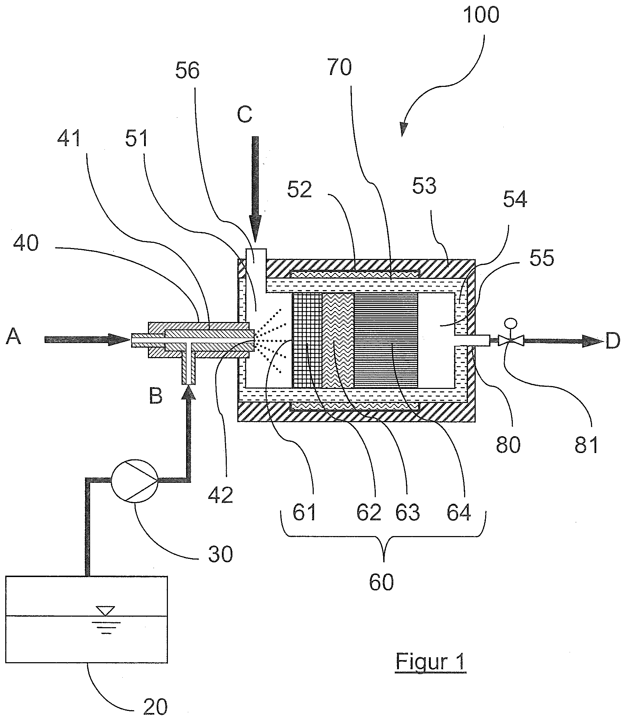

In Figur 1 ist ein erster Ammoniakgasgenerator (100) gemäß der vorliegenden Erfindung dargestellt. Der Generator (100) liegt in Form eines Zylinders vor und umfasst eine Eindüsungsvorrichtung (40), eine Katalysatoreinheit (70) und einen Auslass (80) für das gebildete Ammoniakgas. Die Katalysatoreinheit (70) besteht aus einem mehrteiligen Hydrolysekatalysator (60), einer Mischkammer (51) und einer Austrittskammer (55). Im Betriebszustand wird die Ammoniakvorläuferlösung (B) aus einem Vorratsbehälter (20) über eine Dosierpumpe (30) zusammen mit einem Zerstäubungsluftstrom (A) über eine Zweistoffdüse (41) mit Düsenöffnung (42) in die Mischkammer (51) des Ammoniakgasgenerators (100) mit einem definierten Sprühwinkel eingesprüht und in feine Tröpfchen verteilt. Optional wird zusätzlich ein heißer Trägergasstrom (C) tangential über den Einlass (56) in die Mischkammer (51) eingeleitet, wodurch eine Wirbelschleierströmung mit den Tröpfchen erzeugt wird, die axial in Richtung des Hydrolysekatalysators (60) auf die Hydrolysekatalysatorstirnfläche (61) geführt wird. Der Katalysator (60) ist derart ausgeführt, dass das erste Segment (62) einen elektrisch heizbaren Metallträger mit Hydrolysebeschichtung darstellt. Anschließend folgen ein nichtbeheizter Metallträgerkatalysator (63) ebenfalls mit Hydrolysebeschichtung und ein nichtbeheizter Katalysator (64) mit Hydrolysebeschichtung als Mischerstruktur ausgeführt zur besseren radialen Verteilung. Das erzeugte Ammoniakgas (D) verlässt zusammen mit dem heißen Trägergasstrom den Generator (100) über die Auslasskammer (55) mit dem Auslass (80) und Ventil (81). Der Generator kann durch eine Mantelheizung (52) um das Gehäuse (54) der Katalysatoreinheit zusätzlich beheizt werden. Bis auf den Kopfbereich in dem sich die Eindüsungsvorrichtung (40) befindet, ist der Ammoniakgasgenerator (100) mit einer Wärmeisolierung (53) aus mikroporösem Dämmmaterial umgeben.

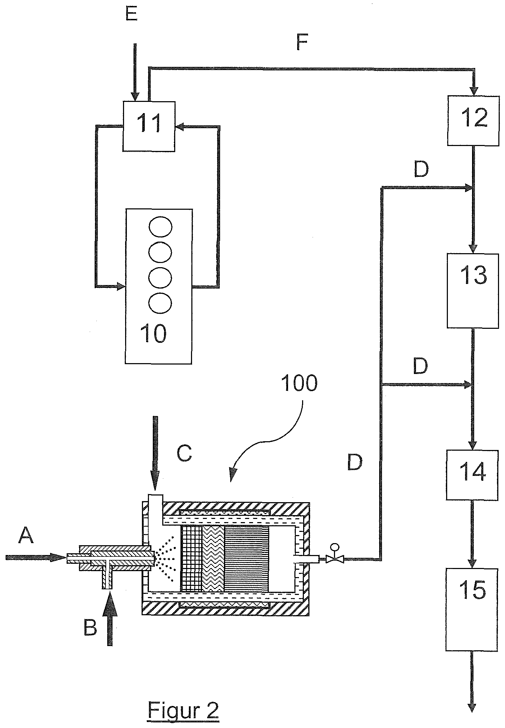

In Figur 2 wird ein schematischer Stoffstrom einer Abgasnachbehandlung an einem Verbrennungsmotor (10) dargestellt. Dabei wird das vom Verbrennungsmotor (10) kommende Abgas über eine Aufladeeinheit (11) geführt und im Gegenstrom Zuluft (E) für die Verbrennungskraftmaschine verdichtet. Das Abgas (F) wird über einen Oxidationskatalysator (12) geführt, um eine höhere NO₂-Konzentration im Verhältnis zu NO zu erreichen. Der aus dem Ammoniakgasgenerator (100) kommende ammoniakhaltige Gasstrom (D) kann sowohl vor als auch nach einem Partikelfilter (13) zugegeben und eingemischt werden. Dabei kann ein zusätzlicher Gasmischer (14) in Form eines statischen Mischers oder z.B. eines Venturimischers verwendet werden. Am SCR-Katalysator (15) erfolgt die Reduzierung der NOx mit Hilfe des Reduktionsmittels NH₃ an einem SCR-Katalysator (SCR = selective catalytic reduction). Dabei kann der Ammoniakgasgenerator mit separatem Trägergas oder auch mit einem Abgasteilstrom betrieben werden.

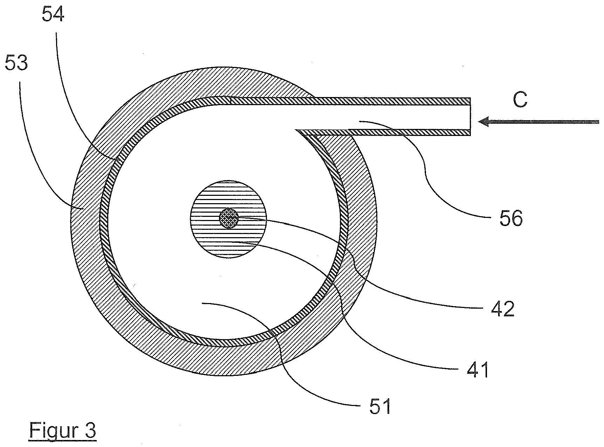

In Figur 3 ist eine Detailansicht der Mischkammer (51) im Bereich der tangentialen Trägergasstromzuführung gezeigt. Das Gehäuse (54) der Katalysatoreinheit ist im Bereich der Mischkammer (51) mit einer Wärmeisolierung (53) aus mikroporösem Dämmmaterial umgeben. Die tangentiale Zuführung des Trägergases (C) erfolgt im Kopfbereich des Ammoniakgasgenerators bzw. im Kopfbereich der Mischkammer (51), in Höhe der Düsenöffnung (42) der Düse (41). Dabei ist der Einlass (56) für den Trägergasstrom (C) derart gestaltet, dass der Trägergasstrom möglichst flach an der Wandung (54) der Mischkammer in der Art eingeleitet ist, dass sich eine abwärtsgerichtete Wirbelströmung im Generator in Richtung Katalysator und somit ein tangentialer Trägergasstrom innerhalb der Katalysatoreinheit einstellt.

### Ausführungsbeispiel 1:

Der Aufbau entspricht prinzipiell dem mit Figur 1 wiedergegebenen Ammoniakgasgenerator. Der Ammoniakgenerator ist ausgelegt für eine Dosiermenge von 10 - 100 g/h NH₃ und als zylindrischer Rohrreaktor ausgeführt. Im Kopfbereich befindet sich mittig angeordnet eine Zweistoffdüse der Firma Schlick Modell 970, (0,3mm) mit variabler Luftkappe, beschichtet mit amorphem Si. Die Ammoniakvorläufersubstanz wird mit Raumtemperatur durch diese Düse eindosiert und in einem Vollkegel zerstäubt. Der Sprühwinkel α beträgt 30 °. Dabei hat sich gezeigt, dass für diesen Aufbau als Ammoniakvorläuferlösung sowohl wässrige Guanidiniumformiatlösung in der Konzentration von 20% bis 60% verwendet werden kann als auch wässrige Harnstofflösung in der Konzentration von 25% bis 40% als auch wässrige Mischungen aus Guanidiniumformiat und Harnstoff.

Die Flüssigkeit wird dabei mittels eines durch die Düse geführten Druckluftstroms (0,5 - 2 bar) von etwa 0,8 kg/h mitgerissen und zerstäubt. Der Sauterdurchmesser der entstehenden Tröpfchen unterhalb der Düse liegt bei < 25 µm. Es erfolgt eine gleichmäßige radiale Verteilung der Lösung der Ammoniakvorläufersubstanz über den Reaktorquerschnitt im heißen Trägergasstrom vor dem Hydrolysekatalysator in einer Mischkammer, ohne dass diese dabei die Innenwand berühren, was zu Ablagerungen führen könnte. In der Mischkammer erfolgt bereits eine Tropfenverdunstung in der Art, dass beim Auftreffen auf die Katalysatorstirnfläche der Tropfendurchmesser um bis zu 20 % reduziert ist. Durch die noch vorhandenen Tröpfchen kommt es an der Katalysatorstirnfläche zu einer Abkühlung von etwa 120 - 150 °C. Aus diesem Grund ist der Reaktor derart ausgeführt, dass die mit dem heißen Trägergasstrom zugeführte Wärmemenge, der integrierte heizbare Hydrolysekatalysator und weitere Energiezuführungen soviel Energie einbringen, dass für die dosierte Menge Lösung keine Abkühlung unter ca. 300 °C stattfindet. Die Dosiermenge von 50 - 280 g/h wird dabei über ein Bosch PWM-Ventil gesteuert. Der Druck für die Förderung der Flüssigkeit wird mittels Überdruck aus einer Druckluftleitung in einem Vorlagebehälter erzeugt, weshalb keine zusätzliche Förderpumpe benötigt wird.

Ein heißer Trägergasstrom von etwa 1 - 5 kg/h wird tangential ebenfalls im Kopfbereich des Ammoniakgasgenerators derart eingeleitet, dass er sich in einer Schleierströmung um die Innenwand der Katalysatoreinheit legt und spiralförmig durch die Mischkammer geleitet wird. Dadurch wird weiter verhindert, dass versprühte Tröpfchen mit der Innenwand in Kontakt kommen. Der Durchmesser der Mischkammer im Kopfbereich des Reaktors beträgt 70 mm. Die Länge der Mischerkammer beträgt 110 mm. Die Mischkammer wird zusätzlich über einen elektrischen Widerstandsheizmantel von außen beheizt (Aufheizzeit max. 1 min.) - Modell Hewit 0,8 - 1 kW, 150 - 200 mm. Die Temperaturregelung erfolgt in Verbindung mit an der Katalysatorstirnfläche, im und nach dem Katalysator angeordneten Temperatursensoren (Typ K). Alle Außenflächen des Reaktors sind mit einer Isolierung Microtherm superG umgeben. Die Microtherm superG Schüttung ist dabei eingebettet zwischen Glasfasergewebe, das um den Reaktor gewickelt ist. Nur der Kopfbereich, in dem sich die Eindüsung der Lösung befindet ist zur besseren Wärmeableitung nicht isoliert. Die Oberflächen in der Mischkammer sind mit katalytisch aktiven TiO₂ washcoat (Anatas Struktur) beschichtet.

Im Anschluss an die Mischkammer ist ein beheizbarer Metallträgerkatalysator mit 55 mm Durchmesser und 400 cpsi angeflanscht (Emitec Emicat, maximale Leistung 1,5 kW, Volumen ca. 170 ml). Dieser ist als Hydrolysekatalysator ausgeführt, ebenfalls mit katalytisch aktivem TiO₂ (Anatas, washcoat ca. 100 g/l, Fa. Interkat / Südchemie) beschichtet und wird so geregelt, dass die Temperatur an der Katalysatorstirnfläche zwischen 300 und 400 °C liegt. Dabei wird lediglich soviel Energie zugeführt, dass die Abkühlung durch die Verdunstung der Tröpfchen kompensiert wird. Zur Erreichung einer Raumgeschwindigkeit von bis zu minimal 7.000 1/h wird ein weiterer Hydrolysekatalysator mit 400 cpsi nachgeschaltet, so dass sich ein Gesamtkatalysatorvolumen von etwa 330 ml ergibt.

Es hat sich in anderen Versuchen mit diesem Aufbau herausgestellt, dass ein Sprühwinkel von 20° bei oben genannter Mischkammerlänge und Katalysatorstirnfläche zu einer zwar zufriedenstellenden, aber noch nicht optimalen gleichmäßigen Benetzung der Katalysatorstirnfläche führt. Eine weitere Verbesserung wurde dadurch erreicht, dass für einen Sprühwinkel von 20° die Länge der Mischkammer auf etwa 150 - 160 mm vergrößert wurde. Für einen Sprühwinkel von 60° werden hingegen bereits mit einer Mischstrecke von etwa 40 - 60 mm optimale Ergebnisse erzielt.

Das am heißen Hydrolysekatalysator erzeugte Ammoniak strömt frei im Fußbereich, zentral aus einer Auslassöffnung aus dem Reaktorendstück aus. Dabei wird der Auslassbereich vorzugsweise konisch geformt, um Wirbelbildung an Kanten und damit Ablagerungen von möglichen Rückständen zu vermeiden. Das Gasgemisch aus dem Ammoniakgasgenerator wird vorzugsweise mit einer Temperatur > 80 °C zur Vermeidung von Ammoniumcarbonatablagerungen dem motorischen Abgasstrom vor SCR-Katalysator zugeben und in diesem Abgasstrom homogen über einen statischen Mischer verteilt.

Als Material für alle metallischen Bauteile wird 1.4301 (V2A, DIN X 5 CrNi18-10) alternativ 1.4401 (V4A, DIN X 2 CrNiMo 17-12-2), 1.4767 oder auch andere abgaskatalysatortypische Fe-Cr-Al-Legierungen verwendet.

**Tabelle 1: Geometrien und Leistung der verwendeten Ammoniakgasgeneratoren (Beispiel 1 entspricht dem Ausführungsbeispiel 1; Generator 2 und 3 sind analog zum Generator 1 aufgebaut und unterscheiden sich in den hiermit angegebenen Abmaßen)**

| | Generator 1 | Generator 2 | Generator 3 |
|---|---|---|---|
| Abstand Düsenöffnung bis Katalysatorstirnfläche [mm] | 100 | 150 | 50 |
| Sprühwinkel α [°] | 30 | 20 | 60 |
| Katalysatordurchmesser [mm] | 55 | 55 | 55 |
| Katalysatorvolumen V_{KAT} [ml] | 330 | 330 | 330 |
| Spraykegeldurchmesser [mm] | 54 | 54 | 54 |
| Mischkammerlänge [mm] | 110 | 160 | 60 |
| Ammoniakbildungsgrad AG [%] | >95% | >95% | >95% |
| Ablagerungen an Katalysatorstirnfläche | keine | keine | keine |
| Ablagerungen an der Mischwandkammer | keine | keine | keine |

Die Generatoren 1 - 3 wurden sowohl mit einer 60%-igen Guanidiniumformiat-Lösung betrieben als auch mit einer 32,5%-igen wässrigen Harnstofflösung und auch mit Mischungen aus beiden. Dabei sind die Ergebnisse dieser Ammoniakvorläuferlösungen in etwa identisch (+/-1 %). Alle Generatoren wurden im Wesentlichen kontinuierlich und wartungsfrei betrieben, da ein Ammoniakbildungsgrad von >95% erreicht wurde, wobei keine Ablagerungen an der Katalysatorstirnfläche oder an der Wandung der Mischkammer beobachtet werden.

Im Folgenden sind diejenigen Betriebsparameter aufgeführt, die beim Betrieb des Ammoniakgasgenerators eingehalten werden sollten.

**Tabelle 2: Übersicht über weitere Betriebsparameter**

| **Bezeichnung** | **Formel** | **Einheiten** | **Bereich** | | |
|---|---|---|---|---|---|
| | | | **von** | **mittel** | **bis** |
| Dosiermassenstrom der Lösung der Ammoniakvorläufersubstanz pro Stunde | m_{Red} | [g/ h] | 50 | 150 | 280 |
| Massenstrom Trägergas | m_{Abg} | [kg/ h] | 1 | 5 | 10 |
| Massenstrom Zerstäubungsluft | m_{Düse} | [kg/ h] | 0,14 | 0,71 | 1,43 |
| Zuheizenergiemenge | E_{Heiz} | [J/ s] = [W] | 0 | 70 | 150 |
| Katalysatorstirnflächentemperatur | Tₑᵢₙ | [°C] | 280 | 350 | 500 |
| Katalysatorauslasstemperatur | Tₐᵤₛ | [°C] | 250 | 320 | 450 |
| Katalysatorraumgeschwindigkeit | RG | [1/ h] | 5.000 | 15.000 | 30.000 |
| Dosierdruck der Flüssigkeit | p_{Red} | [bar] | 1 | 2 | 8 |
| Katalysatorstirnflächenbelastung pro Stunde | m_{Red}/ Aₖₐₜ | [g/ (h*cm²)] | 0,53 | 1,59 | 3,45 |
| spezifischer Enthalpiestrom | H_{TG}/ m_{Red} | [kJ/ kg] | 8.000 | 16.000 | 25.000 |

Liegen diese Parameter im entsprechenden Bereich ist ein Betrieb des Ammoniakgasgenerators ohne Ablagerungen und mit annähernd vollständiger Umsetzung der Ammoniakvorläuferlösung gegeben.

Liegt z. B. der eingebrachte spezifische Enthalpiestrom unterhalb des in Tabelle 2 aufgeführten Bereichs, so ist keine vollständige Zersetzung des Ammoniakvorläufers mehr gegeben. Es kommt zu Ablagerungen im Katalysator und der Umsatz geht auf unter 90 % zurück.

Wird die Katalysatorstirnflächenbelastung überschritten (z. B. Dosiermenge bei 500 g/h), kommt es zu einer zu starken Abkühlung an der Katalysatorstirnfläche. Bei zu geringer Temperatur an der Katalysatorstirnfläche werden die auftreffenden Tröpfchen nicht mehr ausreichend verdampft und es kommt zu unerwünschten Nebenreaktionen (Triazinbildung) an der Katalysatorstirnfläche.

### Ausführungsbeispiel 2:

In Ausführungsbeispiel 2 ist der Reaktor derart ausgeführt, dass der Reaktor zum Teil durch Gegenstromwärmetausch von dem zugeführten, heißen Trägergasstrom mitbeheizt wird. Dabei wird der Trägergasstrom zunächst unterhalb des Reaktorkopfes über einen Doppelmantel entgegen der Strömungsrichtung im inneren des Doppelmantels an die Reaktorwand geführt und umströmt diese auf dem Weg zum Reaktorkopf. Am Reaktorkopf tritt die Hauptströmung aus dem Reaktordoppelmantel über mehrere Bohrungen oder alternativ über einen Ringspalt im Bereich der Düse am Reaktorkopf in das Reaktorinnere ein. Zusätzlich kann sich im Doppelmantel eine elektrische Widerstandsheizung befinden.

### Ausführungsbeispiel 3:

In Ausführungsbeispiel 3 ist der Reaktor derart ausgeführt, dass die Beheizung des Reaktors von außen nicht über eine elektrische Widerstandsheizung erfolgt sondern über Wärmeaustausch mit heißen Bauteilen eines Verbrennungsmotors, separaten Brenners zur Abgasbeheizung oder heißen Gasströmen. Dabei kann auch die Wärme über Wärmerohr über gewisse Distanz zum Reaktor transportiert werden.

### Ausführungsbeispiel 4:

In Ausführungsbeispiel 4 ist der Reaktor derart ausgeführt, dass keine Beheizung des Reaktors von außen erfolgt sondern über Wärme über einen elektrisch beheizbaren Katalysator Emikat von Fa. Emitec direkt im inneren des Reaktors zugeführt wird. Alternativ kann Wärme im Reaktor durch Glühkerzen Modell Champion (60W, 11V) erzeugt werden.

### Ausführungsbeispiel 5:

Mit Vorheizung der flüssigen Lösung der Ammoniakvorläufersubstanz - bei Verwendung eines Injektors mit kritischer Überhitzung (flash-Verdampfer).

## Patentansprüche

1. Ammoniakgasgenerator (100) zur Erzeugung von Ammoniak aus einer Lösung einer Ammoniakvorläufersubstanz umfassend
- eine Katalysatoreinheit (70), die einen Katalysator (60) zur Zersetzung und/ oder Hydrolyse von Ammoniakvorläufersubstanzen in Ammoniak und eine dem Katalysator (60) vorgelagerte Mischkammer (51) umfasst, wobei der Katalysator (60) ein Katalysatorvolumen V_{Kat} und die Mischkammer (51) ein Mischkammervolumen V_{Misch} aufweist,
- eine Eindüsungsvorrichtung (40) zur Einbringung der Lösung der Ammoniakvorläufersubstanz in die Mischkammer (51),
- einen Auslass (80) für das gebildete Ammoniakgas,
wobei die Eindüsungsvorrichtung (40) eine Düse (41) umfasst, die einen theoretischen Sprühwinkel α von 10 ° bis 90 ° aufweist und der Abstand der Düsenöffnung (42) zur Stirnfläche (61) des Katalysators (60) von 15 bis 2.000 mm beträgt,
**dadurch gekennzeichnet, dass** der Ammoniakgasgenerator mindestens eine thermische Isolationsschicht (53) aufweist.

2. Ammoniakgasgenerator (100) nach Anspruch 1, **dadurch gekennzeichnet, dass** die Eindüsungsvorrichtung (40) eine Düse (41) umfasst, die einen Sprühwinkel α von 20 ° bis 60 ° aufweist und der Durchmesser des Katalysators D_{Kat} 30 bis 80 mm beträgt.

3. Ammoniakgasgenerator (100) nach Anspruch 1, **dadurch gekennzeichnet, dass** die Eindüsungsvorrichtung (40) eine Düse (41) umfasst, die einen Sprühwinkel α von 20 ° bis 60 ° aufweist und der Durchmesser des Katalysators D_{Kat} 80 bis 450 mm beträgt.

4. Ammoniakgasgenerator (100) nach Anspruch 1, **dadurch gekennzeichnet, dass** die Eindüsungsvorrichtung (40) eine Düse (41) umfasst, die einen Sprühwinkel α von 20 ° bis 60 ° aufweist und der Durchmesser des Katalysators D_{Kat} 450 bis 1.000 mm beträgt.

5. Ammoniakgasgenerator (100) nach mindestens einem der vorgenannten Ansprüche, **dadurch gekennzeichnet, dass** das Verhältnis des Volumens der Mischkammer V_{Misch} zum Volumen des Katalysators V_{Kat} dem Verhältnis von 1,5 : 1 bis 5 : 1 entspricht.

6. Ammoniakgasgenerator (100) nach mindestens einem der vorgenannten Ansprüche, **dadurch gekennzeichnet, dass** die Eindüsungsvorrichtung (40) mindestens zwei Düsen zur Einbringung der Lösung der Ammoniakvorläufersubstanz in die Mischkammer umfasst, die zugleich oder separat voneinander schaltbar sind.

7. Ammoniakgasgenerator (100) nach mindestens einem der vorgenannten Ansprüche, **dadurch gekennzeichnet, dass** der Ammoniakgasgenerator (100) einen weiteren Einlass (56) für ein Trägergas umfasst, der einen tangentialen Trägergasstrom in Bezug auf die in die Mischkammer (51) eingedüste Lösung erzeugt.

8. Ammoniakgasgenerator (100) nach mindestens einem der vorgenannten Ansprüche, **dadurch gekennzeichnet, dass** die Düse (41) eine Zweistoffdüse und der Katalysator (60) ein Hydrolysekatalysator ist.

9. Ammoniakgasgenerator (100) nach mindestens einem der vorgenannten Ansprüche, **dadurch gekennzeichnet, dass** die Düse (41) eine erste Anzahl an Düsenöffnungen zur Einbringung der Lösung in die Katalysatoreinheit (70) aufweist, die von einer zweiten Anzahl an Düsenöffnungen zur Einbringung eines Trägergases in die Katalysatoreinheit (70) ringförmig umgeben ist.

10. Ammoniakgasgenerator (100) nach mindestens einem der vorgenannten Ansprüche, **dadurch gekennzeichnet, dass** der Ammoniakgasgenerator (100) weiterhin eine Dosiereinheit (30) zur Dosierung der Lösung der Ammoniakvorläufersubstanz umfasst, die der Eindüsungsvorrichtung (40) vorgeschaltet ist.

11. Ammoniakgasgenerator (100) nach mindestens einem der vorgenannten Ansprüche, **dadurch gekennzeichnet, dass** der Katalysator (60) ein Hydrolysekatalysator mit einer Katalysatorzellenanzahl von mindestens 60 cpsi bis höchstens 800 cpsi ist.

12. Ammoniakgasgenerator (100) nach mindestens einem der vorgenannten Ansprüche, **dadurch gekennzeichnet, dass** der Katalysator (60) eine katalytisch aktive Beschichtung aufweist, die mit Gold und/oder Palladium imprägniert ist.

13. Ammoniakgasgenerator (100) nach mindestens einem der vorgenannten Ansprüche, **dadurch gekennzeichnet, dass** die Katalysatoreinheit (70) einen zweigeteilten Hydrolysekatalysator (62, 63) umfasst, dessen in Strömungsrichtung erster Teil in Form eines beheizten Katalysators (62) und dessen zweiter Teil in Form eines nicht beheizten Katalysators (63, 64) vorliegt.

14. Verwendung eines Ammoniakgasgenerators (100) nach mindestens einem der vorgenannten Ansprüche zur Reduktion von Stickoxiden in Abgasen aus Industrieanlagen, aus Verbrennungsmotoren, aus Gasmotoren, aus Dieselmotoren oder aus Benzinmotoren.

## Claims

1. Ammonia gas generator (100) for generating ammonia from a solution of an ammonia precursor substance, comprising
- a catalyst unit (70), which comprises a catalyst (60) for decomposing and/or hydrolysing ammonia precursor substances into ammonia and a mixing chamber (51) upstream from the catalyst (60), the catalyst (60) being of a catalyst volume V_{Kat} and the mixing chamber (51) being of a mixing chamber volume V_{Misch},
- an injection device (40) for introducing the solution of the ammonia precursor substance into the mixing chamber (51),
- an outlet (80) for the ammonia gas which is formed,
wherein the injection device (40) comprises a nozzle (41) which has a theoretical spray angle α of 10° to 90° and the distance of the nozzle opening (42) from the end face (61) of the catalyst (60) is from 15 to 2000 mm,
**characterised in that** the ammonia gas generator comprises at least one thermal insulation layer (53).

2. Ammonia gas generator (100) according to claim 1, **characterised in that** the injection device (40) comprises a nozzle (41) which has a spray angle α of 20° to 60° and the diameter of the catalyst D_{Kat} is 30 to 80 mm.

3. Ammonia gas generator (100) according to claim 1, **characterised in that** the injection device (40) comprises a nozzle (41) which has a spray angle α of 20° to 60° and the diameter of the catalyst D_{Kat} is 80 to 450 mm.

4. Ammonia gas generator (100) according to claim 1, **characterised in that** the injection device (40) comprises a nozzle (41) which has a spray angle α of 20° to 60° and the diameter of the catalyst D_{Kat} is 450 to 1000 mm.

5. Ammonia gas generator (100) according to at least one of the aforementioned claims, **characterised in that** the ratio of the volume of the mixing chamber V_{Misch} to the volume of the catalyst V_{Kat} is a ratio of 1.5 : 1 to 5 : 1.

6. Ammonia gas generator (100) according to at least one of the aforementioned claims, **characterised in that** the injection device (40) comprises at least two nozzles, which can be switched jointly or separately, for introducing the solution of the ammonia precursor substance into the mixing chamber

7. Ammonia gas generator (100) according to at least one of the aforementioned claims, **characterised in that** the ammonia gas generator (100) comprises a further inlet (56) for a carrier gas which generates a tangential carrier gas stream with respect to the solution injected into the mixing chamber (51).

8. Ammonia gas generator (100) according to at least one of the aforementioned claims, **characterised in that** the nozzle (41) is a two-substance nozzle and the catalyst (60) is a hydrolysis catalyst.

9. Ammonia gas generator (100) according to at least one of the aforementioned claims, **characterised in that** the nozzle (41) comprises a first number of nozzle openings for introducing the solution into the catalyst unit (70), which are annularly surrounded by a second number of nozzle openings for introducing a carrier gas into the catalyst unit (70).

10. Ammonia gas generator (100) according to at least one of the aforementioned claims, **characterised in that** the ammonia gas generator (100) further comprises a metering unit (30) for metering the solution of the ammonia precursor substance, which is upstream from the injection device (40).

11. Ammonia gas generator (100) according to at least one of the aforementioned claims, **characterised in that** the catalyst (60) is a hydrolysis catalyst having a catalyst cell count of at least 60 cpsi to at most 800 cpsi.

12. Ammonia gas generator (100) according to at least one of the aforementioned claims, **characterised in that** the catalyst (60) comprises a catalytically active coating which is impregnated with gold and/or palladium.

13. Ammonia gas generator (100) according to at least one of the aforementioned claims, **characterised in that** the catalyst unit (70) comprises a hydrolysis catalyst (62, 63) which is divided in two, the first part of which in the flow direction is in the form of a heated catalyst (62) and the second part of which is in the form of an unheated catalyst (63, 64).

14. Use of an ammonia gas generator (100) according to at least one of the aforementioned claims for reducing nitrogen oxides in exhaust from industrial facilities, from combustion engines, from gas engines, from diesel engines or from petrol engines.

## Revendications

1. Générateur de gaz ammoniac (100) destiné à la production d'ammoniac à partir d'une solution d'une substance agissant comme précurseur de l'ammoniac, comprenant
- une unité de catalyseur (70) qui comprend un catalyseur (60) destiné à la décomposition et/ou à l'hydrolyse en ammoniac de substances agissant comme précurseur de l'ammoniac, et une chambre de mélange (51) placée en amont du catalyseur (60), le catalyseur (60) présentant un volume de catalyseur V_{Kat}, et la chambre de mélange (51) présentant un volume de chambre de mélange V_{Misch},
- un dispositif d'injection (40) destiné à l'introduction, dans la chambre de mélange (51), de la solution de la substance agissant comme précurseur de l'ammoniac,
- une sortie (80) pour le gaz ammoniac formé,
le dispositif d'injection (40) comprenant une buse (41) qui présente un angle de pulvérisation α théorique de 10° à 90°, et la distance entre l'orifice de la buse (42) et la face avant (61) du catalyseur (60) est de 15 à 2 000 mm,
**caractérisé en ce que** le générateur de gaz ammoniac présente au moins une couche d'isolation (53) thermique.

2. Générateur de gaz ammoniac (100) selon la revendication 1, **caractérisé en ce que** le dispositif d'injection (40) comprend une buse (41) qui présente un angle de pulvérisation α de 20° à 60°, et le diamètre du catalyseur D_{Kat} est de 30 à 80 mm.

3. Générateur de gaz ammoniac (100) selon la revendication 1, **caractérisé en ce que** le dispositif d'injection (40) comprend une buse (41) qui présente un angle de pulvérisation α de 20° à 60°, et le diamètre du catalyseur D_{Kat} est de 80 à 450 mm.

4. Générateur de gaz ammoniac (100) selon la revendication 1, **caractérisé en ce que** le dispositif d'injection (40) comprend une buse (41) qui présente un angle de pulvérisation α de 20° à 60°, et le diamètre du catalyseur D_{Kat} est de 450 à 1 000 mm.

5. Générateur de gaz ammoniac (100) selon au moins l'une des revendications précédentes, **caractérisé en ce que** le rapport du volume de la chambre de mélange V_{Misch} au volume du catalyseur V_{Kat} correspond au rapport de 1,5 : 1 à 5 : 1.

6. Générateur de gaz ammoniac (100) selon au moins l'une des revendications précédentes, **caractérisé en ce que** le dispositif d'injection (40) comprend au moins deux buses pour l'introduction, dans la chambre de mélange, de la solution de la substance agissant comme précurseur de l'ammoniac qui peuvent être actionnées simultanément ou indépendamment les unes des autres.

7. Générateur de gaz ammoniac (100) selon au moins l'une des revendications précédentes, **caractérisé en ce que** le générateur de gaz ammoniac (100) comprend une autre entrée (56) pour un gaz porteur qui produit un flux de gaz porteur tangentiel par rapport à la solution injectée dans la chambre de mélange (51).

8. Générateur de gaz ammoniac (100) selon au moins l'une des revendications précédentes, **caractérisé en ce que** la buse (41) est une buse à deux fluides et le catalyseur (60) est un catalyseur d'hydrolyse.

9. Générateur de gaz ammoniac (100) selon au moins l'une des revendications précédentes, **caractérisé en ce que** la buse (41) présente un premier nombre d'orifices de buse pour l'introduction de la solution dans l'unité de catalyseur (70) qui est entourée de façon annulaire d'un deuxième nombre d'orifices de buse pour l'introduction d'un gaz porteur dans l'unité de catalyseur (70).

10. Générateur de gaz ammoniac (100) selon au moins l'une des revendications précédentes, **caractérisé en ce que**, pour le dosage de la solution de la substance agissant comme précurseur de l'ammoniac, le générateur de gaz ammoniac (100) comprend en outre une unité de dosage (30) qui est placée en amont du dispositif d'injection (40).

11. Générateur de gaz ammoniac (100) selon au moins l'une des revendications précédentes, **caractérisé en ce que** le catalyseur (60) est un catalyseur d'hydrolyse avec une quantité de cellules de catalyseur d'au moins 60 cpsi jusqu'à 800 cpsi au plus.

12. Générateur de gaz ammoniac (100) selon au moins l'une des revendications précédentes, **caractérisé en ce que** le catalyseur (60) présente un revêtement catalytique actif qui est imprégné d'or et/ou de palladium.

13. Générateur de gaz ammoniac (100) selon au moins l'une des revendications précédentes, **caractérisé en ce que** l'unité de catalyseur (70) comprend un catalyseur d'hydrolyse (62, 63) divisé en deux parties dont la première partie, dans le sens de l'écoulement, se présente sous la forme d'un catalyseur (62) chauffé et dont la deuxième partie se présente sous la forme d'un catalyseur (63, 64) non chauffé.

14. Utilisation d'un générateur de gaz ammoniac (100) selon au moins l'une des revendications précédentes par la réduction d'oxydes d'azote dans des rejets gazeux issus d'installations industrielles, de moteurs à combustion, de moteurs à gaz, de moteurs diesel ou de moteurs à essence.
